**Europäisches Patentamt**

(19) **European Patent Office**

. **Office européen des brevets**

(11) Veröffentlichungsnummer: **0 255 672**
**B1**

(12) # EUROPÄISCHE PATENTSCHRIFT

(45) Veröffentlichungstag der Patentschrift:
**08.11.89**

(51) Int. Cl.⁴: **B01J 31/08**, C07C 2/28

(21) Anmeldenummer: **87110812.2**

(22) Anmeldetag: **25.07.87**

(54) **Katalysatorharze und Verfahren zu ihrer Herstellung.**

(30) Priorität: **06.08.86 DE 3626581**

(43) Veröffentlichungstag der Anmeldung:
**10.02.88 Patentblatt 88/6**

(45) Bekanntmachung des Hinweises auf die Patenterteilung:
**08.11.89 Patentblatt 89/45**

(84) Benannte Vertragsstaaten:
**AT BE DE FR GB IT NL SE**

(56) Entgegenhaltungen:
**EP-A- 0 087 658**
**EP-A- 0 138 732**
**DE-A- 1 800 380**
**US-A- 3 668 271**
**US-A- 3 678 099**

(73) Patentinhaber: **BAYER AG,**
**D-5090 Leverkusen 1 Bayerwerk(DE)**

(72) Erfinder: **Oeckl, Siegfried, Dr., Auf der Höhe 74,**
**D-5060 Bergisch Gladbach 1(DE)**
Erfinder: **Mitschker, Alfred, Dr., Am Gartenfeld 50,**
**D-5068 Odenthal-Hoiz(DE)**
Erfinder: **Lange, Peter Michael, Dr.,**
**Walter-Flex-Strasse 9, D-5090 Leverkusen 1(DE}**
Erfinder: **Martinola, Friedrich, Dr.,**
**Leopold-Gmelin-Strasse 16, D-5000 Köln 80(DE)**

**Beschreibung**

Die Erfindung betrifft ein neues Verfahren zur Herstellung von mit katalytisch wirksamen Metallen beladenen, starksauren Kationenaustauschern und die nach diesem Verfahren erhältlichen Katalysatorharze.

Als "Katalysatorharze" werden in der Fachwelt und im Rahmen der vorliegenden Erfindung mit katalytisch wirksamen Metallen beladene Ionenaustauscher auf Kunstharzbasis bezeichnet.

Mit katalytisch wirksamen Metallen beladene starksaure Kationenaustauscher sind bekannt. Diese Katalysatorharze haben wegen ihrer Bifunktionalität für technische Verfahren zunehmend an Bedeutung gewonnen. Infolgedessen wurde auch ihre Herstellung eingehend bearbeitet. Ziel aller bislang bekannten Herstellungsverfahren für Katalysatorharze war, Harze zu gewinnen, die im Betrieb möglichst lange eine möglichst hohe katalytische Aktivität aufweisen und diese Aktivität auch bei längerer Lagerung behalten.

Die bislang bekannten Verfahren zur Herstellung von mit katalytisch aktiven Metallen beladenen starksauren Kationenaustauschern lassen sich in zwei verschiedene Typen einteilen:

A. Die Verfahren, bei denen der Kationenaustauscher zuerst mit der Lösung eines Salzes des katalytisch aktiven Metalls beladen und dann mit dem Reduktionsmittel behandelt wird; solche Verfahren sind z.B. in den DE-AS 1 260 454, 1 800 379 und 1 800 380, der DE-OS 1 643 044 und den EP-A-0 043 986 und 0 087 658 beschrieben.

B. Die Verfahren, bei denen der Kationenaustauscher zuerst mit dem Reduktionsmittel beladen und dann mit der Lösung eines Salzes des kationaktiven Metalls behandelt wird; solche Verfahren sind z.B. in der DE-AS 1 800 379 und der DE-PS 1 112 047 beschrieben.

Die Verfahren des Typs B. weisen gegenüber den Verfahren des Typs A. den Nachteil auf, daß die auf dem Kationenaustauscher fixierten Reduktionsmittel nach der Reduktion nur mit großem Aufwand wieder aus dem Harz entfernbar sind und daß die Aktivität der erhaltenen Katalysatorharze geringer ist, weil die Arbeitsweise zur Abscheidung katalytisch weniger wirksamer Metallagglomerate und nicht zu einer monomolekularen Verteilung des Metalls im Harz führt. Wegen der leichteren Ausführbarkeit der Verfahren des Typs A und der günstigeren Eigenschaften der bei diesen Verfahren erhaltenen Kata lysatorharze werden vorwiegend die Verfahren des Typs A. zur Herstellung von Katalysatorharzen angewendet. Trotzdem genügen auch die nach Verfahren A. hergestellten Kationenaustauscher den hohen Ansprüchen noch nicht, die heutzutage an die Aktivitäten und Standzeiten der Katalysatorharze gestellt werden. Insbesondere bei den in den EP-A-0 043 986 und 0 087 658 beschriebenen Verfahren zur Herstellung von Alkyltert.-alkylethern bzw. Verfahren zur katalytischen Umsetzung von i-Alken unter gleichzeitiger weitgehender Entfernung von Acetylen-Verbindungen, Carbonyl-Verbindungen und gegebenenfalls Diolefinen durch Hydrierung bestand ein Bedarf an kinetisch wirksameren Katalysatorharzen, die die Anwendung höherer Durchflußgeschwindigkeiten der zu hydrierenden Verbindungen erlauben und trotzdem zu der gewünschten vollständigen Umsetzung führen.

Überraschenderweise wurde nun gefunden, daß man Katalysatorharze mit wesentlich verbesserter Aktivität erhält, wenn man nach Verfahrenstyp A. arbeitet, aber die Beladung der starksauren Kationenaustauscher nicht wie bislang bei Raumtemperatur, sondern bei erhöhter Temperatur vornimmt und zur Reduktion der beladenen Kationenaustauscher nicht die bislang verwendeten Reduktionsmittel, wie Hydrazin, Hydroxylamin, Wasserstoff oder Kohlenoxid sondern Ameisensäure verwendet. Durch diese neuen Verfahrensmaßnahmen, Beladung bei erhöhter Temperatur und Reduktion der mit den Metallionen beladenen Kationenaustauscher mit Ameisensäure, wird eine Steigerung der katalytischen Aktivität der Katalysator harze bis zu einem mehrfachen verglichen mit der katalytischen Aktivität der nach den bislang bekannten Verfahren des Typs A hergestellten Katalysatorharze erzielt.

Die Erfindung betrifft daher ein Verfahren zur Herstellung von mit katalytisch wirksamen Metallen beladenen starksauren Kationenaustauschern durch Beladen der Kationenaustauscher mit Lösungen der Salze der katalytisch wirksamen Metalle und Reduktion der mit Metallionen beladenen Kationenaustauscher, das dadurch gekennzeichnet ist, daß man die Beladung der Kationenaustauscher bei Temperaturen von 50 bis 120°, vorzugsweise 70 bis 100°C vornimmt und als Reduktionsmittel Ameisensäure verwendet.

Die Erfindung betrifft ferner vorzugsweise mit Palladium beladene Katalysatorharze, die durch Beladen starksaurer Kationenaustauscher mit Lösungen der Salze der katalytisch wirksamen Metalle, vorzugsweise Palladiumsalzlösungen, bei Temperaturen von 50 bis 120°C und Reduktion des mit den Ionen des katalytisch wirksamen Metalls beladenen Kationenaustauschers mit Ameisensäure, erhalten wurden.

Die Ameisensäure wird in einer Menge von mindestens 1 g pro Liter Harz eingesetzt; die Menge ist nach oben nicht begrenzt, man kann sogar Ameisensäure als Suspensionsmedium für einen Reduktionsansatz verwenden. Bevorzugt wird die Ameisensäure jedoch in einer Menge von 10 bis 2000 g je Liter Harz, besonders bevorzugt von 100 bis 1200 g je Liter Harz, eingesetzt.

Als katalytisch wirksame Metalle kommen vor allem die Metalle der 8. Nebengruppe des periodischen Systems der Elemente, insbesondere Palladium und Platin in Betracht. Das erfindungsgemäße Verfahren eignet sich besonders zur Herstellung von Palladium-beladenen starksauren Kationenaustauschern.

Die Salze dieser katalytisch wirksamen Metalle werden in Form von gegebenenfalls Wasser enthaltenden Lösungen in polaren organischen Lösungsmitteln wie nicht-reduzierenden niederen aliphatischen Carbonsäuren, z.B. Essigsäure oder ein- oder mehrwertigen Alkoholen, z.B. Methanol, Ethanol, Ethylenglykol, Diethylenglykol, angewendet.

Als starksaure Kationenaustauscher werden vorzugsweise handelsübliche starksaure Kationenaustauscher auf Basis von mit Divinylbenzol vernetzten Polystyrolsulfonsäuren verwendet. Die starksauren Kationenaustauscher können gelförmig oder makroporös sein; vorzugsweise werden makroporöse Kationenaustauscher eingesetzt.

Das erfindungsgemäß Verfahren wird vorzugsweise wie folgt ausgeführt:
Der starksaure Kationenaustauscher wird in entmineralisiertem Wasser suspendiert. Die Suspension wird unter Rühren bei Temperaturen von 50 bis 120°C, vorzugsweise 70 bis 100°C mit der Lösung der berechneten Menge eines Salzes des katalytisch wirksamen Metalls, vorzugsweise Palladium, versetzt. Die Menge an Metallsalz richtet sich nach der gewünschten Beladung des Kationenaustauschers. Bei einer gegebenen Temperatur innerhalb des beanspruchten Bereiches läßt sich durch die Geschwindigkeit der Zugabe der Metallsalzlösung zu dem Kationenaus tauscher die Eindringtiefe der Metallionen in die Körner des Kationenaustauschers und damit die Aktivität des Katalysators einstellen. Überraschenderweise wurde gefunden, daß bei der erfindungsgemäßen Beladung bei erhöhter Temperatur die Eindringtiefe umso geringer ist, je langsamer man die Metallsalzlösung zusetzt.

Es wurde gefunden, daß man Katalysatorharze mit besonders günstigen Eigenschaften, hoher katalytischer Aktivität bei gleichzeitig hoher Lebensdauer (Standzeit) erhält, wenn man bei der angewendeten Temperatur die Zugabegeschwindigkeit so wählt, daß sich das katalytisch wirksame Metall unter der Harzoberfläche in einer Schale abscheidet, deren Dicke D mindestens 1/25 des Harzkornradius R und höchstens die Hälfte des Harzkornradius R beträgt, d.h. deren Dicke D = 0,04 bis 0,5 R beträgt. Vorzugsweise ist D = 0,08 bis 0,4 R.

Die Verteilung des Metalls innerhalb der Harzkörner und die Dicke D der Metallschale läßt sich durch einfache mikroskopische Untersuchung der Harzkornquerschnitte ohne weiteres bestimmen.

Nach erfolgter Adsorption der Metallionen durch den Kationenaustauscher - sie ist an der Entfärbung der Suspension erkennbar - wird die flüssige Phase soweit abgelassen, daß der Kationenaustauscher gerade noch von Flüssigkeit bedeckt ist. Die so erhaltene Masse wird anschließend unter Rühren bei erhöhter Temperatur mit Ameisensäure versetzt und solange weitergerührt, bis die Reduktion beendet ist (erkennbar an der Verfärbung des Kationenaustauschers; bei Verwendung von Palladium, Farbe des Kationenaustauschers zu Beginn der Reduktion: gelbgrau, Farbe des Katalysatorharzes am Ende der Reduktion: grau).

Anschließend wird das Harz von der flüssigen Phase abgetrennt und mit entmineralisiertem Wasser gewaschen, bis der pH-Wert des ablaufenden Wassers einen Wert von 6 bis 7 aufweist.

Das Reduktionsmittel Ameisensäure hat gegenüber dem üblicherweise verwendeten Reduktionsmittel Hydrazin den großen Vorteil, daß es wesentlich leichter aus dem Harz entfernbar ist. Während bei Verwendung von Ameisensäure als Reduktionsmittel ein Waschen des reduzierten Katalysatorharzes mit wenigen Bettvolumina entmineralisiertem Wasser ausreicht, um das Harz in einen betriebsbereiten Zustand zu bringen, erfordert das Reduktionsmittel Hydrazin eine regelrechte Regeneration des nach der Reduktion anfallenden Kationenaustauschers mit Säuren, z.B. HCl (siehe DE-AS 1 112 047, Beispiel 1).

Die Reduktion der mit Metallionen beladenen Kationenaustauscher mit Wasserstoff hat den Nachteil, daß sie, wenn sie bei höheren Temperaturen vorgenommen wird, trockene Harze erfordert. Die Reduktion der Harze in getrocknetem Zustand führt aber, verglichen mit der Reduktion im feuchten Zustand, zu einem veränderten Katalysatorgefüge und damit zu einer Abnahme der katalytischen Aktivität der Harze.

Wird die Reduktion dagegen bei Raumtemperatur durchgeführt, so müssen die Harze nicht nur gründlich mit Stickstoff vorgespült werden, sondern es müssen auch unwirtschaftlich lange Reduktionszeiten in Kauf genommen werden.

Die erfolgreiche Verwendung von Ameisensäure als Reduktionsmittel für auf Kationenaustauscher aufgebrachte Metallionen ist deshalb überraschend, weil gemäß Stand der Technik (siehe DE-P 1 112 047) empfohlen wird, um ein Ablösen der Metallionen zu vermeiden, als Reduktionsmittel schwache Elektrolyte bzw. Nichtelektrolyte wie Hydrazin, Hydroxylamin, Kohlenmonoxid oder phosphorige Säure zu verwenden und den pH-Wert der Lösung in der Nähe von 7 zu halten; demzufolge werden gemäß DE-AS 1 800 379 nur Formiate, d.h. Salze der Ameisensäure, und diese zudem noch gebunden an ein anionisches Austauscherharz, als mögliche Reduktionsmittel erwähnt.

Überraschenderweise wurde gefunden, daß Ameisensäure im erfindungsgemäßen Verfahren nicht nur ein ausgezeichnet wirksames und leicht entfernbares Reduktionsmittel ist, sondern daß bei weniger gründlichem Auswaschen der reduzierten Katalysatorharze, die in diesen verbliebenen Restmengen an Ameisensäure eine erhöhte Lagerstabilität der Katalysatorharze in feuchtem Zustand bewirken. Die bei der Lagerung der reduzierten Katalysatorharze in feuchtem Zustand häufig beobachtete Veränderung der Edelmetallbelegung kann verhindert werden, wenn das Katalysatorharz in wasserfeuchtem Zustand einen gewissen Gehalt von 0,01 bis 10 Gew.-%, bezogen auf das Gewicht des feuchten Katalysatorharzes, an Ameisensäure aufweist.

Beispiel 1

10 ml makroporöser stark saurer Kationenaustauscher auf Basis von mit 18 Gew.-% Divinylbenzol vernetzter Polystyrolsulfonsäure (Totalkapazität an Sulfonsäuregruppen: 1,35 Mol/l Harz) werden in einem Becherglas mit entmineralisiertem Wasser zu einem Gesamtvolumen von 20 ml aufgefüllt. Die Suspension wird unter Rühren bei 90°C mit der Lösung von 20 mg Palladiumacetat (= 10 mg Pd) in einem Milliliter Eisessig innerhalb einer Minute versetzt. Die zunächst gelbliche Suspension entfärbt sich innerhalb von 25 bis 30 Sekunden. Zur Vervollständigung der Palladiumionen-Adsorption wird die Suspension noch 5 Minuten nachgerührt.

Zur Reduktion der Palladiumionen wird die flüssige Phase bis zur Harzoberfläche abgelassen. Die verbleibende Suspension wird bei 90°C unter Rühren mit 12 g Ameisensäure (98 %ig) versetzt und anschließend noch 15 Minuten weitergerührt. Während des Reduktionsvorganges verfärbt sich das Harz von gelbgrau nach grau. Nach beendeter Reduktion wird die flüssige Phase abgetrennt und das Katalysatorharz mit 4 Bettvolumina entmineralisiertem Wasser gewaschen. Das nach dem Ablaufen des letzten Waschwassers zurückbleibende feuchte Harz ist unmittelbar verwendbar.

Zur Überprüfung der Verteilung des Palladiums innerhalb der Körner des Katalysatorharzes werden Harzkornquerschnitte unter einem Lichtmikroskop mit Längenmeßeinrichtung im Auflicht untersucht. Diese Untersuchung ergab, daß das metallische Palladium eine deutlich abgesetzte dunkle Schicht von 0,13 mm Dicke (bei einem mittleren Korndurchmesser von 1,0 mm) unter der Oberfläche der Harzkörner bildet (D = 0,26 R).

Zur Bestimmung der Lagerbeständigkeit des erhaltenen Katalysatorharzes wurde das feuchte Katalysatorharz (10 ml) in ein dicht verschließbares Gefäß gefüllt, 1 g Ameisensäure zugesetzt, der Inhalt kurz umgeschüttelt und 4 Wochen bei einer Temperatur von 54°C (entsprechend einer Lagerzeit von etwa 1 Jahr bei Raumtemperatur) verschlossen gelagert. Nach der Lagerung war keine Verschiebung, Verbreiterung oder Verblassung der Palladiumschicht feststellbar.

Beispiel 2

Es wurde wie in Beispiel 1 beschrieben verfahren, nur wurde die Palladiumacetatlösung nicht innerhalb 1 Minute sondern innerhalb von 10 Minuten tropfenweise zugesetzt.

Die mikroskopische Untersuchung der Körner des auf diese Weise erhaltenen Katalysatorharzes ergab, daß das metallische Palladium eine deutlich abgesetzte dunkle Schicht von 0,10 mm Dicke (bei einem mittleren Korndurchmesser von 1,0 mm) unter der Oberfläche der Harzkörner bildet (D = 0,2 R).

Beispiel 3

Es wurde wie in Beispiel 1 beschrieben verfahren, nur wurde die Palladiumacetatlösung nicht innerhalb 1 Minute sondern innerhalb von 45 Minuten zugetropft.

Die mikroskopische Untersuchung der Körner des so erhaltenen Katalysatorharzes ergab, daß das metallische Palladium eine deutlich abgesetzte dunkle Schicht von 0,04 mm Dicke (bei einem mittleren Korndurchmesser von 1,0 mm) unter der Oberfläche der Harzkörner bildet (D = 0,08 R).

Beispiel 4

Es wurde wie in Beispiel 1 beschrieben verfahren, nur wurde die Palladiumacetatlösung bei 50°C innerhalb von 60 Minuten zugegeben.

Die mikroskopische Untersuchung der Körner des auf diese Weise erhaltenen Katalysatorharzes ergab, daß das metallische Palladium eine deutlich abgesetzte dunkle Schicht von 0,25 mm Dicke (bei einem mittleren Korndurchmesser von 1,0 mm) unter der Oberfläche der Harzkörner bildet (D = 0,5 R).

Beispiel 5

Es wurde wie in Beispiel 1 beschrieben verfahren, nur wurde die Palladiumacetatlösung bei 50°C innerhalb von 90 Minuten zugegeben.

Die mikroskopische Untersuchung der Harzkörner ergab, daß das metallische Palladium eine deutlich abgesetzte dunkle Schicht von 0,2 mm Dicke (bei einem mittleren Korndurchmesser von 1,0 mm) unter der Oberfläche der Harzkörner bildet (D = 0,4 R).

Beispiel 6

(Bestimmung der katalytischen Wirksamkeit der Katalysatorharze)

Beschreibung des Tests:

50 ml Katalysatorharz der einheitlichen Kornfraktion 0,5 bis 1,0 mm werden in ein Glasfilter (Durchmesser: 22 mm) eingefüllt. Durch dieses Harzbett wird von oben nach unten bei 19 bis 20°C mit Sauerstoff gesättigtes, entmineralisiertes Wasser mit einem Gehalt von 12 bis 14 mg Hydrazin je Liter gepumpt. Der Rest-Sauerstoffgehalt in dem aus dem Harzbett ablaufenden Wasser wird bei unterschiedlichen spezifischen Belastungen mit einem handelsüblichen Sauerstoffmeßgerät bestimmt.

In der nachstehenden Tabelle sind die, für die untersuchten Katalysatorharze bei den angegebenen spezifischen Belastungen gefundenen $O_2$-Restgehalte zusammengestellt.

Es wurden folgende Katalysatorharze getestet:

Harz A: Katalysatorharz gemäß Beispiel 2
Harz B: Katalysatorharz gemäß Beispiel 5
Harz C: Harz gemäß Beispiel 1 der EP-A-0 087 658 = Harz gemäß Beispiel 1 der EP-A-0 043 986
Harz D: Harz gemäß Beispiel 3 der DE-AS 18 00 379 = Harz gemäß Beispiel 1 der DE-AS 18 00 380

Um die Vergleichbarkeit der Katalysatorharze unter den angewendeten Testbedingungen zu gewährleisten, wurden alle Katalysatorharze aus dem gleichen starksauren Kationenaustauscher hergestellt und mit der gleichen Menge Palladium (1 g Palladium pro Liter Harz) beladen und durch Siebung auf eine einheitliche Kornfraktion von 0,5 bis 1,0 mm gebracht.

**Tabelle**

| Katalysator-harz | Sauerstoff-Restwerte (µg/l) bei folgenden spezifischen Belastungen (BV/h): | | | | | | |
|---|---|---|---|---|---|---|---|
| | 600 | 500 | 400 | 300 | 200 | 100 | 50 |
| Harz A | 3600 | 3150 | 2550 | 1675 | 833 | 126 | 22 |
| Harz B | 3800 | 3240 | 2856 | 2128 | 1346 | 361 | 66 |
| Harz C | 6360 | 5930 | 5300 | 4510 | 3280 | 1383 | 340 |
| Harz D | 4600 | 4460 | 3850 | 3130 | 2110 | 713 | 127 |

BV = Bettvolumen = Volumen des Katalysatorharzbettes

## Patentansprüche

1. Verfahren zur Herstellung von mit katalytisch wirksamen Metallen beladenen starksauren Kationenaustauschern durch Beladen der Kationenaustauscher mit der Lösung eines Salzes des katalytisch wirksamen Metalls und Reduktion der mit Metallionen beladenen Kationenaustauscher, dadurch gekennzeichnet, daß man die Beladung der Kationenaustauscher bei Temperaturen von 50 bis 120°C vornimmt und als Reduktionsmittel Ameisensäure verwendet.

2. Verfahren gemäß Anspruch 1, dadurch gekennzeichnet, daß man die Beladung der Kationenaustauscher bei Temperaturen von 70 bis 100°C vornimmt.

3. Verfahren gemäß Anspruch 1 oder 2, dadurch gekennzeichnet, daß das katalytisch wirksame Metall Palladium ist.

4. Verfahren nach einem der Ansprüche 1 bis 3, dadurch gekennzeichnet, daß man die Ameisensäure aus dem Katalysatorharz nicht restlos sondern nur soweit entfernt, daß die Konzentration an Ameisensäure in dem feuchten Katalysatorharz 0,01 bis 10 Gew.-% bezogen auf das Gewicht des feuchten Katalysatorharzes beträgt.

## Claims

1. Process for the preparation of strongly acid cation exchangers loaded with catalytically active metals by loading the cation exchangers with a solution of a salt of the catalytically active metal and reducing the cation exchangers loaded with metal ions, characterized in that the loading of the cation exchangers is carried out at temperatures from 50 to 120°C and formic acid is used as the reducing agent.

2. Process according to claim 1, characterized in that the loading of the cation exchangers is carried out at temperatures from 70 to 100°C.

3. Process according to claim 1 or 2, characterized in that the catalytically active metal is palladium.

4. Process according to one of claims 1 to 3, characterized in that the formic acid is not removed completely from the catalyst resin, but only to the extent that the concentration of formic acid in the moist catalyst resin is 0.01 to 10% by weight, relative to the weight of the moist catalyst resin.

## Revendications

1. Procédé de préparation d'échangeurs de cations fortement acides chargés de métaux à activité catalytique, en chargeant les échangeurs de cations avec la solution d'un sel du métal à activité catalytique et par réduction des échangeurs de cations chargés d'ions de métaux, caractérisé en ce qu'on effectue le chargement des échangeurs de cations à des températures de 50 à 120°C tandis que, comme agent de réduction, on utilise l'acide formique.

2. Procédé selon la revendication 1, caractérisé en ce qu'on effectue le chargement des échangeurs de cations à des températures de 70 à 100°C.

3. Procédé selon la revendication 1 ou 2, caractérisé en ce que le métal à activité catalytique est le palladium.

4. Procédé selon une des revendications 1 à 3, caractérisé en ce qu'on élimine l'acide formique hors de la résine catalytique non pas complètement, mais uniquement dans la mesure où la concentration en acide formique dans la résine catalytique humide s'élève à 0,01–10% en poids, rapporté au poids de la résine catalytique humide.